(19) Europäisches Patentamt / European Patent Office / Office européen des brevets

(11) **EP 4 509 374 B1**

(12) **EUROPEAN PATENT SPECIFICATION**

(45) Date of publication and mention
of the grant of the patent:
**14.01.2026 Bulletin 2026/03**

(51) International Patent Classification (IPC):
***B60T 8/1755*** *(2006.01)*   ***B60W 40/10*** *(2012.01)*

(52) Cooperative Patent Classification (CPC):
**B60T 8/172; B60W 40/068; B60W 40/10;**
B60T 2210/12

(21) Application number: **23191866.5**

(22) Date of filing: **17.08.2023**

(54) **SURFACE FRICTION DETERMINATION**

OBERFLÄCHENREIBUNGSBESTIMMUNG

DÉTERMINATION DE FROTTEMENT DE SURFACE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**19.02.2025 Bulletin 2025/08**

(73) Proprietor: **VOLVO TRUCK CORPORATION
405 08 Göteborg (SE)**

(72) Inventors:
• ERDINC, Umur
  **413 26 Göteborg (SE)**
• BALIGA, Nikhil
  **413 02 Göteborg (SE)**

(74) Representative: **Ström & Gulliksson AB
P.O. Box 4188
203 13 Malmö (SE)**

(56) References cited:
**EP-A2- 0 970 876     JP-A- 2023 095 123**

## Description

## TECHNICAL FIELD

The invention relates generally to vehicle operation. In particular aspects, the invention relates to surface friction determination. The invention can be applied to heavy-duty vehicles, such as trucks, buses, and construction equipment, among other vehicle types. Although the invention may be described with respect to a particular vehicle, the invention is not restricted to any particular vehicle.

## BACKGROUND

In vehicle operations, surface friction estimation is crucial to safe transport. This can be achieved using friction estimation models that calculate surface friction based on data from wheel torques, axle loads, cameras and the like. In many scenarios, vehicles travel predefined routes repeatedly, for example delivery routes for heavy-duty vehicles, such as trucks. Increasingly, this is being performed by autonomous vehicles. Surface conditions may change between journeys, for example due to weather and other factors, which can result in a change in surface friction even when the same route is travelled by the same vehicle. This can result in vehicles being controlled in a way that is not appropriate for current surface conditions.

It is therefore desired to develop a solution for determining a difference in surface friction between different surface conditions that addresses or at least mitigates some of these issues.

JP 2023 095123 A discloses a steering control method and steering control device. A feedforward axial force and a feedback axial force are calculated, a slip angle of a front wheel is estimated, a mixing rate of the feedforward and feedback axial forces is set according to the estimated slip angle, and a steering reaction force is imparted on the basis of a mixed axial force which is obtained by mixing the feedforward and feedback axial forces at the mixing rate.

EP 0970876 A2 discloses a wheel slip angle detecting system for a vehicle. A travel state of a vehicle is detected. A first lateral slip angle of a vehicle body is calculated by integrating a differentiated value of a lateral slip angle determined based on a non-linear four-wheel vehicle's motion model. A second lateral slip angle of the vehicle body is calculated by a calculation in a linear two-wheel vehicle's motion model. The second lateral slip angle is selected when a state in which the vehicle is traveling straightforwardly at a low speed is detected. A slip angle of each wheel is calculated based on the selected lateral slip angle.

## SUMMARY

This invention attempts to address the problems noted above by providing systems, methods and other approaches for determining a difference in surface friction between a first set of surface conditions and a second set of surface conditions by comparing slip angles. This enables a change in surface friction to be determined and taken into account when controlling vehicles that travel the route in the near future, for example by controlling brake and steering actuators appropriately to keep the vehicle on the determined path or by increasing the speed in the knowledge that the friction is higher than previously estimated. This is particularly useful for autonomous vehicles, vehicles that travel the same route repeatedly, or vehicles that travel in convoys.

The invention is defined in the appended independent claims 1 and 8.

According to a first aspect of the invention, there is provided a computer system determining a difference in surface friction between a first set of surface conditions and a second set of surface conditions, the computer system comprising processing circuitry configured to receive first data corresponding to a first set of surface conditions, the first data comprising a first slip angle for at least one wheel of a vehicle, receive second data corresponding to a second set of surface conditions, the second data comprising a second slip angle for at least one wheel of a vehicle, compare the first slip angle and the second slip angle, and upon there being a difference between the first slip angle and the second slip angle, determine that a surface friction associated with the first set of surface conditions is different from a surface friction associated with the second set of surface conditions, wherein a lateral acceleration of the vehicle associated with the first data is substantially the same as a lateral acceleration of the vehicle associated with the second data.

The first aspect of the invention may seek to provide a solution for determining a difference in surface friction between different surface conditions. A technical benefit may include the indication of a change in surface friction from past or expected values, which can enable improved control of vehicles that travel the route in the near future.

Optionally in some examples, including in at least one preferred example, the processing circuitry is configured to determine the first slip angle and/or the second slip angle based on one or more of a longitudinal velocity $v_x$, a lateral velocity $v_y$, a longitudinal acceleration $a_x$, a lateral acceleration $a_y$, a steering angle $\delta$, and/or a yaw rate $\omega$ of the respective vehicle. A technical benefit may include accurate determination of slip angles, leading to improved determination of any difference in surface friction.

Optionally in some examples, including in at least one preferred example, the processing circuitry is further configured to determine that the surface friction associated with the second set of surface conditions is lower than the surface friction value associated with the first set of surface conditions if the first slip angle is larger than the second slip angle. A technical benefit may include the determination of how the surface friction is changing, thus enabling control of vehicles that travel the route in the near future to be adapted accordingly.

Optionally in some examples, including in at least one preferred example, at least one of a vehicle load, vehicle speed, tyre type, tyre pressure, and tyre wear is substantially constant between the vehicle associated with the first data and the vehicle associated with the second data. A technical benefit may include ensuring a robust comparison between the different surface conditions, meaning that the likelihood of erroneous determinations is reduced.

Optionally in some examples, including in at least one preferred example, the lateral acceleration of the vehicle associated with the first data is within a threshold of the lateral acceleration of the vehicle associated with the second data. A technical benefit may include providing a simple and reliable way of ensuring a robust comparison between the different surface conditions.

Optionally in some examples, including in at least one preferred example, the processing circuitry is further configured to process the first data such that the lateral acceleration of the vehicle associated with the first data is substantially the same as the lateral acceleration of the vehicle associated with the second data. A technical benefit may include enabling the use of data that would otherwise not be useful for comparison between different surface conditions.

Optionally in some examples, including in at least one preferred example, the first data and the second data are associated with the same section of a route. A technical benefit may include the determination of a change of conditions of a section of a route over time, enabling vehicles that travel the same route in the near future to be controlled accordingly.

Optionally in some examples, including in at least one preferred example, the first data is received from a first real vehicle and the second data is received from a second real vehicle. A technical benefit may include the determination of a change of conditions by a first vehicle, enabling a second vehicle that travels the route in the near future, for example following in a convoy, to be controlled accordingly.

Optionally in some examples, including in at least one preferred example, one of the first or second data is received from a real vehicle, and the other of the first and second data is received from a vehicle model. A technical benefit may include the determination of a difference between real and modelled conditions, enabling control schemes for real vehicles, for example autonomous vehicles, to be adapted accordingly.

Optionally in some examples, including in at least one preferred example, the processing circuitry is further configured to determine a surface friction value associated with the second set of surface conditions. A technical benefit may include the determination of an accurate and up to date surface friction value that can be used in vehicle motion management to give reliable control.

According to a second aspect of the invention, there is provided a vehicle comprising the system.

According to a third aspect of the invention, there is provided a computer-implemented method for determining a difference in surface friction between a first set of surface conditions and a second set of surface conditions, the method comprising receiving, by processing circuitry of a computer system, first data corresponding to a first set of surface conditions, the first data comprising a first slip angle for at least one wheel of a vehicle, receiving, by the processing circuitry, second data corresponding to a second set of surface conditions, the second data comprising a second slip angle for at least one wheel of a vehicle, comparing, by the processing circuitry, the first slip angle and the second slip angle, and upon there being a difference between the first slip angle and the second slip angle, determining, by the processing circuitry, that a surface friction associated with the first set of surface conditions is different from a surface friction associated with the second set of surface conditions, wherein a lateral acceleration of the vehicle associated with the first data is substantially the same as a lateral acceleration of the vehicle associated with the second data.

The third aspect of the invention may seek to provide a solution for determining a difference in surface friction between different surface conditions. A technical benefit may include the indication of a change in surface friction from past or expected values, which can enable improved control of vehicles that travel the route in the near future.

Optionally in some examples, including in at least one preferred example, receiving the first and/or second data comprises determining, by the processing circuitry, the first slip angle and/or the second slip angle based on one or more of a longitudinal velocity $v_x$, a lateral velocity $v_y$, a longitudinal acceleration $a_x$, a lateral acceleration $a_y$, a steering angle $\delta$, and/or a yaw rate $\omega$ of the respective vehicle. A technical benefit may include accurate determination of slip angles, leading to improved determination of any difference in surface friction.

Optionally in some examples, including in at least one preferred example, the computer-implemented method further comprises determining, by the processing circuitry, that the surface friction associated with the second set of surface conditions is lower than the surface friction value associated with the first set of surface conditions if the first slip angle is larger than the second slip angle. A technical benefit may include the determination of how the surface friction is changing, thus enabling control of vehicles that travel the route in the near future to be adapted accordingly.

Optionally in some examples, including in at least one preferred example, at least one of a vehicle load, vehicle speed, tyre type, tyre pressure, and tyre wear are substantially constant between the vehicle associated with the first data and the vehicle associated with the second data. A technical benefit may include ensuring a robust comparison between the different surface conditions, meaning that the likelihood of erroneous determinations is reduced.

Optionally in some examples, including in at least one preferred example, the lateral acceleration of the vehicle associated with the first data is within a threshold of the lateral acceleration of the vehicle associated with the second data. A technical benefit may include providing a simple and reliable way of ensuring a robust comparison between the different surface conditions.

Optionally in some examples, including in at least one preferred example, the computer-implemented method further comprises processing, by the processing circuitry, the first data such that the lateral acceleration of the vehicle associated with the first data is substantially the same as the lateral acceleration of the vehicle associated with the second data. A technical benefit may include enabling the use of data that would otherwise not be useful for comparison between different surface conditions.

Optionally in some examples, including in at least one preferred example, the first data and the second data are associated with the same section of a route. A technical benefit may include the determination of a change of conditions of a section of a route over time, enabling vehicles that travel the same route in the near future to be controlled accordingly.

Optionally in some examples, including in at least one preferred example, the first data is received from a first real vehicle and the second data is received from a second real vehicle. A technical benefit may include the determination of a change of conditions by a first vehicle, enabling a second vehicle that travels the route in the near future, for example following in a convoy, to be controlled accordingly.

Optionally in some examples, including in at least one preferred example, the first data is received from a real vehicle, and the second data is received from a vehicle model. A technical benefit may include the determination of a difference between real and modelled conditions, enabling control schemes for real vehicles, for example autonomous vehicles, to be adapted accordingly.

Optionally in some examples, including in at least one preferred example the computer-implemented method further comprises determining, by the processing circuitry, a surface friction value associated with the second set of surface conditions. A technical benefit may include the determination of an accurate and up to date surface friction value that can be used in vehicle motion management to give reliable control.

According to a fourth aspect of the invention, there is provided a computer program product comprising program code for performing, when executed by processing circuitry, the computer-implemented method.

According to a fifth aspect of the invention, there is provided a non-transitory computer-readable storage medium comprising instructions, which when executed by processing circuitry, cause the processing circuitry to perform the computer-implemented method.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1** schematically shows a top-view of a vehicle, according to an example.
**FIG. 2** is a plot of lateral tyre force against slip angle for different values of a surface friction coefficient, according to an example.
**FIG. 3** is a flow chart of an example computer-implemented method according to an example.
**FIG. 4** is a plot of lateral tyre force against slip angle for different operating points, according to an example.
**FIG. 5** is a schematic diagram of an exemplary computer system for implementing examples disclosed herein, according to an example.

Like reference numerals refer to like elements throughout the description.

## DETAILED DESCRIPTION

The detailed description set forth below provides information and examples of the disclosed technology with sufficient detail to enable those skilled in the art to practice the disclosure.

In many vehicle operations, vehicles travel predefined routes repeatedly, for example delivery routes for heavy-duty vehicles, such as trucks. Increasingly, this is being performed by autonomous vehicles. Surface conditions may change between journeys, for example due to weather and other factors, which can result in a change in surface friction even when the same route is travelled by the same vehicle. Accurate and up to date knowledge of surface conditions, including surface friction, is crucial to safe transport.

To remedy this, systems, methods and other approaches are provided for determining a difference in surface friction between a first set of surface conditions and a second set of surface conditions. This is achieved by determining slip angles associated with the different sets of surface conditions, and comparing these slip angles. Upon there being a difference in the slip angle it can be determined that there is a difference in surface friction between the two sets of surface conditions. This can be taken into account when controlling vehicles that travel the route in the near future. For example, an updated surface friction value can be determined and used in control of brake and steering actuators to keep the vehicle on the determined path, or to allow an increase in vehicle speed where friction is sufficiently high. This is particularly useful for autonomous vehicles, vehicles that travel the same route repeatedly, or vehicles that travel in convoys. The approaches disclosed herein can be used in tandem with existing friction estimation models as a complement or a redundancy.

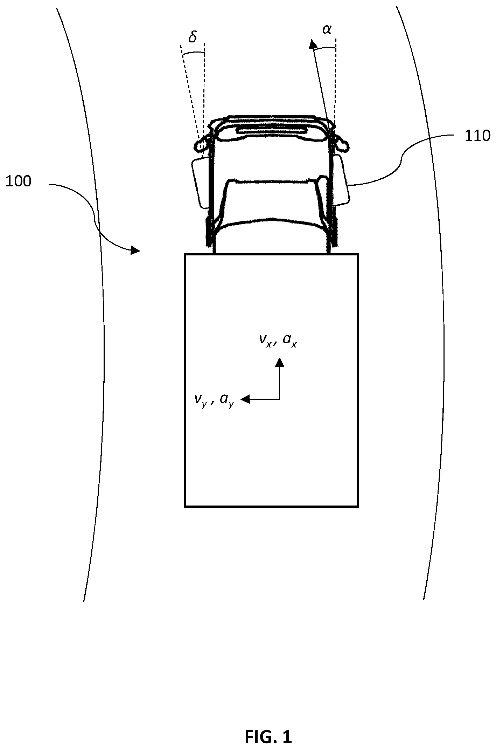

**FIG. 1** schematically shows a top-view of an example vehicle **100** of the type considered in this disclosure. The vehicle **100** shown in **FIG. 1** is an example of a truck, however the systems and methods disclosed herein can be used with any suitable form of vehicle **100**. For example, the disclosure can be applied in heavy-duty vehicles, such as trucks, buses, and construction equipment, in personal vehicles such as cars, vans, or motorbikes, or in any other suitable form of vehicle. In some examples, the vehicle **100** may be a vehicle combination comprising a number of units, including a tractor unit and at least one trailing unit.

In the example of **FIG. 1,** the vehicle **100** is shown travelling on a curved path. **FIG. 1** shows the relevant motion parameters of the vehicle **100**. Examples of motion parameters of the vehicle **100** may include, for example, a longitudinal/axial velocity $v_x$, a lateral/radial velocity $v_y$, a longitudinal/axial acceleration $a_x$, a lateral/radial acceleration $a_y$, and/or a steering angle $\delta$. Another relevant motion parameter is the yaw rate $\omega$ of the vehicle 100, which is the angular velocity of the rotation of the heading angle of the vehicle **100**.

When the vehicle **100** is in motion, the wheels (or indeed tyres) **110** of the vehicle 100 experience slip. Slip can be expressed as the slip on the vehicle **100** as a whole, or the slip on a given wheel **110,** and can be divided into longitudinal and lateral slip. These parameters are known in the art, and not discussed in detail here. However, it is noted that the slip angle $\alpha$ for a given wheel **110,** i.e. the angle between the longitudinal dimension of the wheel **110** (the direction in which the wheel **110** is pointing) and the traveling direction of the wheel **110,** can be defined as:

$$\alpha = arctan\left(\frac{v_{yw}}{v_{xw}}\right)$$

where $v_{xw}$ is the longitudinal velocity of the wheel **110,** and $v_{yw}$ is the lateral velocity of the wheel **110.**

In general, slip increases as surface friction decreases (e.g. there is more slip on ice than on asphalt). If slip is not controlled appropriately, it can lead to instability of the vehicle, for example off-tracking or, in the case of a vehicle combination comprising a number of units, jack-knifing or trailer swing. Whilst a curved path is shown in **FIG. 1,** it will be appreciated that the approaches disclosed herein are applicable to any situation where some lateral slip is present, including straight-line driving.

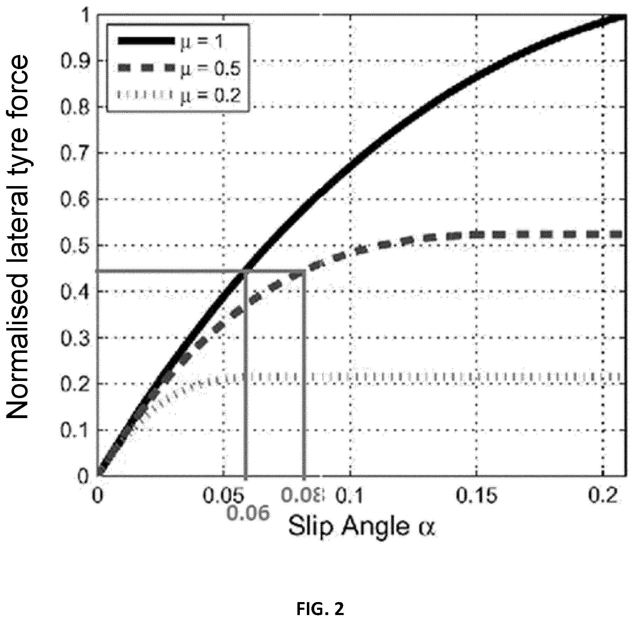

**FIG. 2** is an example plot of the normalised lateral tyre force against slip angle for different values of a surface friction coefficient $\mu$. The plot is taken from "Estimation of Tire Slip Angle and Friction Limits Using Steering Torque." By Hsu, Yung-Hsiang Judy et al. IEEE Transactions on Control Systems Technology 18 (2010): 896-907. The lateral tyre force may be determined in any suitable manner known in the art. The normalised lateral tyre force is determined by dividing the lateral tyre force by the normal load on the wheel. Lateral force can be converted to lateral acceleration, and vice versa, using Newton's second law of motion.

As can be seen in **FIG. 2,** for small slip angles (for example less than around 0.2 radians), the lateral tyre force is relatively independent of the friction coefficient. Beyond this, the surface friction has a significant influence. As the slip angle increases, the lateral tyre force saturates and the vehicle understeers. The saturation point occurs at larger slip angles for higher surface friction. This means that a vehicle travelling on a relatively high friction surface can generate larger lateral tyre forces and therefore negotiate curves in a safer manner.

The concepts illustrated by the plot shown in **FIG. 2** allow a difference in surface friction to be determined when the lateral tyre force, or a lateral acceleration of the vehicle **100,** is the same. For example, for a given lateral tyre force, an increase in slip angle is indicative of a decrease in friction. Taking the example of **FIG. 2,** for a normalised lateral tyre force of 0.45, a slip angle of 0.6 radians indicates that the surface friction coefficient is 1, whereas a slip angle of 0.8 radians indicates that the surface friction coefficient is 0.5. It will be appreciated that different values will be relevant for different plots of normalised lateral tyre force against slip angle, which are dependent on tyre parameters.

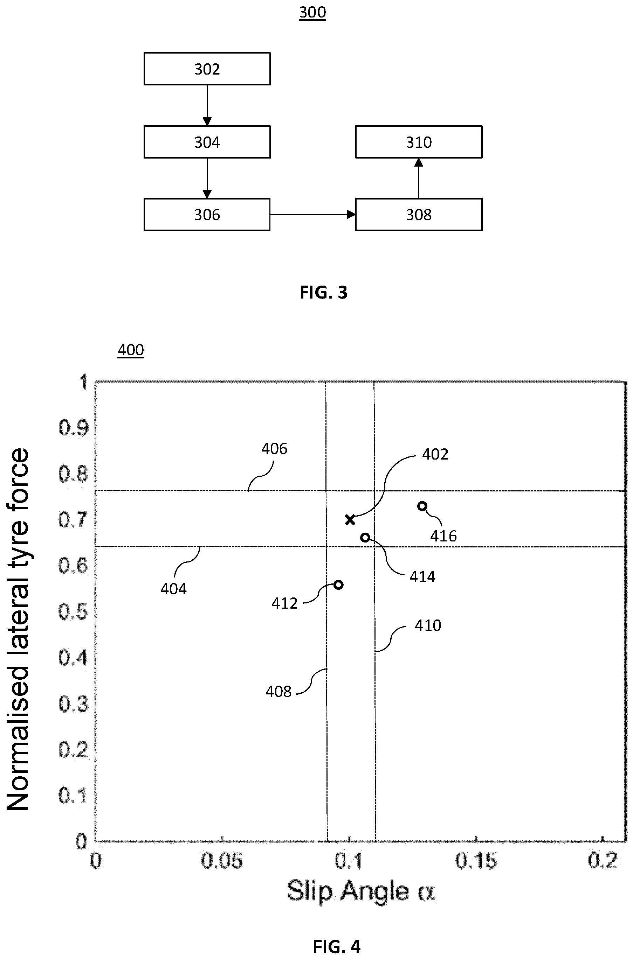

**FIG. 3** is a flow chart of an example computer-implemented method **300** for determining a difference in surface friction between a first set of surface conditions and a second set of surface conditions according to an example. The method **300** may be performed by a control system of a vehicle, for example the vehicle **100** shown in the example of **FIG. 1.** The control system may be implemented on-board the vehicle, remotely from the vehicle, or a combination of the two.

At **302,** first data corresponding to a first set of surface conditions is received. In particular, the data may be data pertinent to a vehicle **100** that is subject to the first set of surface conditions. Surface conditions may include a surface friction value, for example a surface friction coefficient $\mu$. The surface conditions may also include a type of surface, a weather situation (e.g. dry, wet or icy conditions), a degree of curvature of a route, a slope of the route, a grade or camber of the route, and other conditions that may affect the motion of a vehicle. The data may be data from a vehicle **100** travelling a particular section of a route that has the first set of surface conditions. Alternatively, the data may be data from a computational model of a vehicle, where the model is used to determine how a vehicle would travel under the first set of surface conditions.

In particular, the data may include motion parameters of a vehicle **100** that is subject to the first set of surface conditions. The motion parameters may include, for example, a longitudinal velocity $v_x$ of the vehicle **100,** a lateral velocity $v_y$ of the vehicle **100,** a longitudinal acceleration $a_x$ of the vehicle **100,** a lateral acceleration $a_y$ of the vehicle **100,** a steering angle $\delta$ of the vehicle **100,** a yaw rate $\omega$ of the vehicle **100,** and/or a vehicle load. The motion parameters may also include wheel-related parameters such as the longitudinal velocity $v_{xw}$ of the wheel **110,** the lateral velocity $v_{yw}$ of the wheel **110,** a tyre type, a tyre pressure, and/or a tyre wear measurement.

In some examples, the data may include a slip angle $\alpha$ of at least one wheel **110** of a vehicle **100** that is subject to the first set of surface conditions. For example, the slip angle may be reported directly from a vehicle **100** or a computer model. In some examples, the slip angle is determined based on the longitudinal velocity $v_{xw}$ and the lateral velocity $v_{yw}$ of the wheel **110,** as discussed above. In some examples, the lateral velocity $v_{yw}$ of the wheel **110** is determined based on one or more of the lateral acceleration $a_y$, steering angle $\delta$, and/or yaw rate $\omega$ of the vehicle **100,** and/or a corner radius travelled by the vehicle **100.** For example, as a larger slip angle $\alpha$ may be generated by further turning the steering wheel, the slip angle $\alpha$ may be determined directly from the steering angle $\delta$. This ensures accurate determination of slip angles, leading to improved determination of any difference in surface friction.

At **304,** second data corresponding to a second set of surface conditions is received. The second data may be data pertinent to a vehicle **100** that is subject to the second set of surface conditions. The second data may be substantially similar to the first data received at **302,** in that the second set of surface conditions may comprise one or more of the same conditions as the first set of surface conditions, albeit those conditions may themselves be different (for example, the first set of surface conditions may be for a dry surface, while the second set of surface conditions may be for a wet surface). Similarly, the second data may include one or more of the same motion parameters as the first data, albeit those parameters may themselves be different (for example, a vehicle that is subject to the first set of surface conditions may be travelling at a higher speed than a vehicle that is subject to the second set of surface conditions). In the case that the first data comprises a slip angle for a specific wheel **110** (e.g. the front right wheel of a vehicle **100**), the second data may also comprise a slip angle for that wheel **110.**

In some examples, the first and second data are associated with the same section of a route. For example, the first and second data may be associated with the same road section, e.g. a particular curve on a particular road. The first data may be received from a vehicle **100** travelling along the road section at a first time, and the second data received from the same vehicle **100** travelling along the road section at a second time. The second time may be earlier or later than the first time. Alternatively, the first data may be received from a first vehicle **100,** while the second data is received from a different vehicle **100** travelling along the same road section at a different time.

In some examples, the first and second data are associated with different sections of a route. For example, the first and second data may be associated with the different road sections, e.g. curves on different roads or different curves on the same road. The first data may be received from a vehicle **100** travelling along one road section, and the second data received from the same vehicle **100** travelling along a different road section. Alternatively, the first data may be received from a first vehicle **100** travelling along one road section, while the second data is received from a different vehicle **100** travelling along a different road section.

In some examples, one of the first or second data may be received from a real vehicle **100** and the other from a vehicle model. For example, a computational model of a vehicle **100** may be used to determine how a vehicle **100** would travel along a particular route. The modelled route may be geometrically similar to that travelled by the real vehicle **100,** for example having curves with similar radius, length, and the like.

Whilst these different scenarios are possible for the first and second data, in order to make a robust and reliable comparison between them, it is important that a lateral acceleration $a_y$ of the vehicle **100** associated with the first data is substantially the same as a lateral acceleration $a_y$ of the vehicle **100** associated with the second data. This will ensure that the forces acting on the vehicle are sufficiently similar to make a relevant comparison.

To ensure this, it may be desirable that the lateral acceleration of the vehicle **100** associated with the first data is within a threshold of the lateral acceleration of the vehicle **100** associated with the second data, or vice versa. This provides a simple way to ensure the lateral accelerations are sufficiently similar. For example, it may be desirable that the lateral acceleration of the vehicle **100** associated with the first data is within a certain percentage of the lateral acceleration of the vehicle **100** associated with the second data, for example up to $\pm 10\%$. This enables larger thresholds to be used for larger lateral accelerations, where larger lateral forces are at play. In some examples, it may be desirable that the lateral accelerations are within a certain percentage of each other. In other examples, the threshold can be an absolute threshold, for example up to $\pm 0.3 m/s^2$.

In some examples, when the lateral accelerations are not within a threshold of each other, one set of data may be processed at **306** in order to bring the lateral accelerations in line. For example, one set of data may be extrapolated such that the lateral accelerations are substantially the same. For example, a look up table approach can be used to extrapolate the slip angle when the loading of the vehicle, vehicle type and/or other parameters are considerably different between the first a second sets of data. The resulting slip angles can then be used in the next step.

In some examples, in order to provide the most reliable comparison between slip angles, further parameters of the first and second data that may affect the slip angle of a vehicle 100 may also need to be similar or the same. For example, loading of the vehicle **100** or tyre wear may affect how the slip angle develops under certain lateral accelerations. Therefore, it may be desirable that at least one of a vehicle load, vehicle speed, tyre type, tyre pressure, and tyre wear is substantially constant between the vehicle **100** associated with the first data and the vehicle **100** associated with the second data. For example, it may be desirable that at least one of the parameters for the first data is within a threshold of the corresponding parameter for the second data, or vice versa. The threshold may be a percentage or an absolute value.

At **308,** the slip angle associated with the first data and the slip angle associated with the second data are compared. For example, it may be determined if the slip angle associated with the first data is within a threshold of the slip angle associated with the second data, or vice versa. The threshold may be a percentage or an absolute value. In the case that a threshold was used to compare the lateral accelerations of the first and second data, corresponding thresholds may be used for the corresponding slip angles. In the case that the first and second data comprise slip angles for a plurality of wheels **110** of a vehicle **100,** the comparison should be made for a specific one of the wheels (e.g. the front right wheel).

At **310,** upon there being a difference between the slip angle associated with the first data and the slip angle associated with the second data, it is determined that a surface friction associated with the first set of surface conditions is different from a surface friction associated with the second set of surface conditions. This is because it can be concluded that, for cases with similar lateral accelerations, any difference in slip angle will be due to a difference in surface friction.

If the first slip angle is larger than the second slip angle, it can be determined that the surface friction associated with the second set of surface conditions is lower than the surface friction value associated with the first set of surface conditions. This is because more slip will occur in conditions with lower friction. Conversely, if the first slip angle is smaller than the second slip angle, it can be determined that the surface friction associated with the second set of surface conditions is higher than the surface friction value associated with the first set of surface conditions.

An example is shown in **FIG. 4,** which is a plot **400** of normalised lateral tyre force against slip angle. The plot **400** shows a first example operating point **402,** which corresponds to a first set of data and a first set of surface conditions. The first operating point **402** has a normalised lateral tyre force of 0.7. In this example, a threshold of $\pm 10\%$ is applied, meaning a lower threshold **404** is set at 0.63 and an upper threshold **406** is set at 0.77. Therefore, for a second operating point that corresponds to a second set of data and a second set of surface conditions to be considered for a comparison of slip angles, it would need to have a normalised lateral tyre force between 0.63 and 0.77. The slip angles can then be compared to determine if there is a difference. In some examples, similar thresholds can be used to determine if the slip angles are sufficiently similar or different for a conclusion to be made. For example, as the first operating point **402** has a slip angle of 0.1 radians, a threshold of $\pm 10\%$ results in a lower threshold **408** set at 0.09 radians and an upper threshold **412** set at 0.11 radians. Therefore, for the slip angle of a second operating point to be considered sufficiently different from the first operating point **402,** it would need to be outside the range of 0.09 radians to 0.11 radians.

Three further example operating points **412, 414, 416** are shown in **FIG. 4,** each corresponding to a particular set of surface conditions. The operating point **412** has a normalised lateral tyre force of 0.57, meaning it is outside the threshold for lateral tyre force, and therefore not considered useful for comparison to the first operating point **402.** The operating point **414** has a normalised lateral tyre force of 0.67, meaning it is inside the threshold for lateral force and can be used for comparison (it should be noted that, applying a threshold of $\pm 10\%$ to the operating point **414** gives values of 0.603 and 0.737, meaning that the first operating point **402** is also inside the threshold for lateral force the operating point **414**). The operating point **414** has a slip angle of 0.105 radians, meaning it can be concluded that the associated surface friction is similar to that of the first operating point **402,** and therefore that there is no significant difference in surface conditions from the first operating point **402.** The operating point **416** has a normalised lateral tyre force of 0.74, meaning it is inside the threshold for lateral force and can be used for comparison (it should be noted that, applying a threshold of $\pm 10\%$ to the operating point **416** gives values of 0.666 and 0.814, meaning that the first operating point **402** is also inside the threshold for lateral force the operating point **416**). The operating point **416** has a slip angle of 0.13 radians, meaning it is concluded that the associated surface friction is different to that of the first operating point **402.** Therefore, it can be concluded that there a difference in surface conditions from the first operating point **402.**

Returning to **FIG. 3**, at **312,** an action can be taken based on the determination at step 310. For example, a vehicle might be travelling at pre-defined speeds along a GPS tracked route. Data corresponding to a dry surface can be used as reference, and any differences can be determined and suitable preventive action can be applied. The reference data can be determined using a real vehicle or a computer model. In some examples, a surface friction value, such a surface friction coefficient, can be determined for the second set of surface conditions. This could be achieved, for example, using a specifically trained machine learning algorithm. This can be taken into account when controlling vehicles that travel the route in the near future, for example by controlling brake and steering actuators to keep the vehicle on the determined path, or by increasing the speed knowing that the friction is higher than previously estimated.

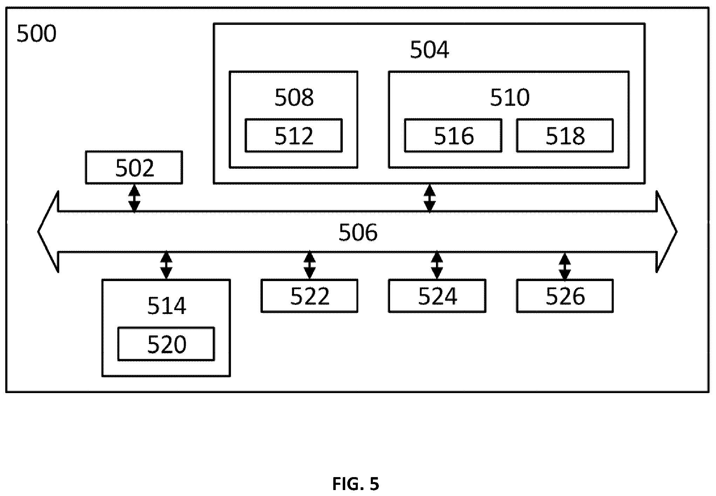

FIG. 5 is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN, an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) 512 may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of the disclosure being set forth in the following claims.

## Claims

1. A computer system for determining a difference in surface friction between a first set of surface conditions and a second set of surface conditions, the computer system comprising processing circuitry configured to:

   receive (302) first data corresponding to a first set of surface conditions, the first data comprising a first slip angle for at least one wheel of a vehicle (100);
   receive (304) second data corresponding to a second set of surface conditions, the second data comprising a second slip angle for at least one wheel of a vehicle (100);
   compare (308) the first slip angle and the second slip angle; and
   upon there being a difference between the first slip angle and the second slip angle, determine (310) that a surface friction associated with the first set of surface conditions is different from a surface friction associated with the second set of surface conditions;
   wherein a lateral acceleration of the vehicle associated with the first data is substantially the same as a lateral acceleration of the vehicle associated with the second data.

2. The computer system of claim 1, wherein at least one of a vehicle load, vehicle speed, tyre type, tyre pressure, and tyre wear is substantially constant between the vehicle (100) associated with the first data and the vehicle (100) associated with the second data.

3. The computer system of claim 1 or 2, wherein the lateral acceleration of the vehicle (100) associated with the first data is within a threshold of the lateral acceleration of the vehicle (100) associated with the second data.

4. The computer system of any preceding claim, wherein the first data and the second data are associated with the same section of a route.

5. The computer system of any preceding claim, wherein the first data is received from a first real vehicle (100) and the second data is received from a second real vehicle (100).

6. The computer system of any of claims 1 to 3, wherein one of the first or second data is received from a real vehicle (100), and the other of the first and second data is received from a vehicle model.

7. A vehicle (100) comprising the computer system of any preceding claim.

8. A computer-implemented method (300) for determining a difference in surface friction between a first set of surface conditions and a second set of surface conditions, the method comprising:

   receiving (302), by processing circuitry of a computer system, first data corresponding to a first set of surface conditions, the first data comprising a first slip angle for at least one wheel of a vehicle (100);
   receiving (304), by the processing circuitry, second data corresponding to a second set of surface conditions, the second data comprising a second slip angle for at least one wheel of a vehicle (100);
   comparing (308), by the processing circuitry, the first slip angle and the second slip angle; and
   upon there being a difference between the first slip angle and the second slip angle, determining (310), by the processing circuitry, that a surface friction associated with the first set of surface conditions is different from a surface friction associated with the second set of surface conditions;
   wherein a lateral acceleration of the vehicle associated with the first data is substantially the same as a lateral acceleration of the vehicle associated with the second data.

9. The computer-implemented method of claim 8, wherein at least one of a vehicle load, vehicle speed, tyre type, tyre pressure, and tyre wear is substantially constant between the vehicle (100) associated with the first data and the vehicle (100) associated with the second data.

10. The computer-implemented method of claim 8 or 9, wherein the lateral acceleration of the vehicle (100) associated with the first data is within a threshold of the lateral acceleration of the vehicle (100) associated with the second data.

11. The computer-implemented method of any of claims 8 to 10, wherein the first data and the second data are associated with the same section of a route.

12. The computer-implemented method of any of claims 8 to 11, wherein the first data is received from a first real vehicle (100) and the second data is received from a second real vehicle (100).

13. The computer-implemented method of any of claims 8 to 10, wherein the first data is received from a real vehicle (100), and the second data is received from a vehicle model.

14. A computer program product comprising program code for performing, when executed by processing circuitry, the computer-implemented method of any of claims 8 to 13.

15. A non-transitory computer-readable storage medium comprising instructions, which when executed by processing circuitry, cause the processing circuitry to perform the computer-implemented method of any of claims 8 to 13.

**Patentansprüche**

1. Computersystem zum Bestimmen eines Unterschieds in der Oberflächenreibung zwischen einem ersten Satz von Oberflächenzuständen und einem zweiten Satz von Oberflächenzuständen, das Computersystem umfassend Verarbeitungsschaltung, die zu Folgendem konfiguriert ist:

   Empfangen (302) erster Daten, die einem ersten Satz von Oberflächenzuständen entsprechen, die ersten Daten umfassend einen ersten Schräglaufwinkel für mindestens ein Rad eines Fahrzeugs (100);
   Empfangen (304) von zweiten Daten, die einem zweiten Satz von Oberflächenzuständen entsprechen, die zweiten Daten umfassend einen zweiten Schräglaufwinkel für mindestens ein Rad eines Fahrzeugs (100);
   Vergleichen (308) des ersten Schräglaufwinkels und des zweiten Schräglaufwinkels; und
   wenn es einen Unterschied zwischen dem ersten und dem zweiten Schräglaufwinkel gibt, Bestimmen (310), dass eine Oberflächenreibung, die mit dem ersten Satz von Oberflächenzuständen assoziiert ist, sich von einer Oberflächenreibung unterscheidet, die mit dem zweiten Satz von Oberflächenzuständen assoziiert ist;
   wobei eine Querbeschleunigung des Fahrzeugs, das mit den ersten Daten assoziiert ist, im Wesentlichen gleich ist wie eine Querbeschleunigung des Fahrzeugs, das mit den zweiten Daten assoziiert ist.

2. Computersystem nach Anspruch 1, wobei mindestens eines von Fahrzeuglast, Fahrzeuggeschwindigkeit, Reifentyp, Reifendruck und Reifenverschleiß zwischen dem Fahrzeug (100), das mit den ersten Daten assoziiert ist, und dem Fahrzeug (100), das mit den zweiten Daten assoziiert ist, im Wesentlichen konstant ist.

3. Computersystem nach Anspruch 1 oder 2, wobei die Querbeschleunigung des Fahrzeugs (100), das mit den ersten Daten assoziiert ist, innerhalb eines Schwellenwerts der Querbeschleunigung des Fahrzeugs (100) ist, das mit den zweiten Daten assoziiert ist.

4. Computersystem nach einem der vorherigen Ansprüche, wobei die ersten Daten und die zweiten Daten mit demselben Bereich einer Strecke assoziiert sind.

5. Computersystem nach einem der vorherigen Ansprüche, wobei die ersten Daten von einem ersten realen Fahrzeug (100) empfangen werden und die zweiten Daten von einem zweiten realen Fahrzeug (100) empfangen werden.

6. Computersystem nach einem der Ansprüche 1 bis 3, wobei eines der ersten oder der zweiten Daten von einem realen Fahrzeug (100) empfangen wird und die anderen der ersten und der zweiten Daten von einem Fahrzeugmodell empfangen wird.

7. Fahrzeug (100), umfassend das Computersystem nach einem der vorherigen Ansprüche.

8. Computerimplementiertes Verfahren (300) zum Bestimmen einer Differenz in der Oberflächenreibung zwischen einem ersten Satz von Oberflächenzuständen und einem zweiten Satz von Oberflächenzuständen, das Verfahren umfassend:

   Empfangen (302), durch eine Verarbeitungsschaltung eines Computersystems, von ersten Daten, die einem ersten Satz von Oberflächenzuständen entsprechen, die ersten Daten umfassend einen ersten Schräglaufwinkel für mindestens ein Rad eines Fahrzeugs (100);
   Empfangen (304), durch eine Verarbeitungsschaltung, von zweiten Daten, die einem zweiten Satz von Oberflächenzuständen entsprechen, die zweiten Daten umfassend einen zweiten Schräglaufwinkel für mindestens ein Rad eines Fahrzeugs (100);
   Vergleichen (308), durch die Verarbeitungsschaltung, des ersten Schräglaufwinkels und des zweiten Schräglaufwinkels; und
   wenn es einen Unterschied zwischen dem ersten Schräglaufwinkel und dem zweiten Schräglaufwinkel gibt, Bestimmen (310) durch die Verarbeitungsschaltung, dass eine Oberflächenreibung, die mit dem ersten Satz von Oberflächenzuständen assoziiert ist, sich von einer Oberflächenreibung unterscheidet, die mit dem zweiten Satz von Oberflächenzuständen assoziiert ist;
   wobei eine Querbeschleunigung des Fahrzeugs, das mit den ersten Daten assoziiert ist, im Wesentlichen gleich ist wie eine Querbeschleunigung des Fahrzeugs, das mit den zweiten Daten assoziiert ist.

9. Computerimplementiertes Verfahren nach Anspruch 8, wobei mindestens eines von Fahrzeuglast, Fahrzeuggeschwindigkeit, Reifentyp, Reifendruck und Reifenverschleiß zwischen dem Fahrzeug (100), das mit den ersten Daten assoziiert ist, und dem Fahrzeug (100), das mit den zweiten Daten assoziiert ist, im Wesentlichen konstant ist.

10. Computerimplementiertes Verfahren nach Anspruch 8 oder 9, wobei die Querbeschleunigung des Fahrzeugs (100), das mit den ersten Daten assoziiert ist, innerhalb eines Schwellenwerts der Querbeschleunigung des Fahrzeugs (100) ist, das mit den zweiten Daten assoziiert ist.

11. Computerimplementiertes Verfahren nach einem der Ansprüche 8 bis 10, wobei die ersten Daten und die zweiten Daten mit demselben Bereich einer Strecke assoziiert sind.

12. Computerimplementiertes Verfahren nach einem der Ansprüche 8 bis 11, wobei die ersten Daten von einem ersten realen Fahrzeug (100) empfangen werden und die zweiten Daten von einem zweiten realen Fahrzeug (100) empfangen werden.

13. Computerimplementiertes Verfahren nach einem der Ansprüche 8 bis 10, wobei die ersten Daten von einem realen Fahrzeug (100) empfangen werden und die zweiten Daten von einem Fahrzeugmodell empfangen werden.

14. Computerprogrammprodukt, umfassend Programmcode, um bei Ausführung durch eine Verarbeitungsschaltung das computerimplementierte Verfahren nach einem der Ansprüche 8 bis 13 durchzuführen.

15. Nicht-transitorisches, computerlesbares Speichermedium, umfassend Anweisungen, die, wenn sie von einer Verarbeitungsschaltung ausgeführt werden, die Verarbeitungsschaltung veranlassen, das computerimplementierte Verfahren nach einem der Ansprüche 8 bis 13 durchzuführen.

**Revendications**

1. Système informatique permettant de déterminer une différence de frottement de surface entre un premier ensemble de conditions de surface et un second ensemble de conditions de surface, le système informatique comprenant un circuit de traitement configuré pour :

recevoir (302) de premières données correspondant à un premier ensemble de conditions de surface, les premières données comprenant un premier angle de glissement pour au moins une roue d'un véhicule (100) ;

recevoir (304) de secondes données correspondant à un second ensemble de conditions de surface, les secondes données comprenant un second angle de glissement pour au moins une roue d'un véhicule (100) ;

comparer (308) le premier angle de glissement et le second angle de glissement ; et

en cas de différence entre le premier et le second angle de glissement, déterminer (310) qu'un frottement de surface associé au premier ensemble de conditions de surface est différent d'un frottement de surface associé au second ensemble de conditions de surface ;

dans lequel une accélération latérale du véhicule associée aux premières données est sensiblement la même qu'une accélération latérale du véhicule associée aux secondes données.

2. Système informatique selon la revendication 1, dans lequel au moins l'un d'une charge de véhicule, d'une vitesse de véhicule, d'un type de pneu, d'une pression de pneu et d'une usure de pneu est sensiblement constant entre le véhicule (100) associé aux premières données et le véhicule (100) associé aux secondes données.

3. Système informatique selon la revendication 1 ou 2, dans lequel l'accélération latérale du véhicule (100) associé aux premières données est inférieure à un seuil de l'accélération latérale du véhicule (100) associé aux secondes données.

4. Système informatique selon l'une quelconque des revendications précédentes, dans lequel les premières données et les secondes données sont associées à la même section d'un itinéraire.

5. Système informatique selon l'une quelconque des revendications précédentes, dans lequel les premières données sont reçues d'un premier véhicule réel (100) et les secondes données sont reçues d'un second véhicule réel (100).

6. Système informatique selon l'une quelconque des revendications 1 à 3, dans lequel les premières données ou les secondes données sont reçues d'un véhicule réel (100), et les autres des premières et secondes données sont reçues d'un modèle de véhicule.

7. Véhicule (100) comprenant le système informatique selon l'une quelconque des revendications précédentes.

8. Procédé (300) mis en œuvre par ordinateur pour déterminer une différence de frottement de surface entre un premier ensemble de conditions de surface et un second ensemble de conditions de surface, le procédé comprenant :

la réception (302), par un circuit de traitement d'un système informatique, de premières données correspondant à un premier ensemble de conditions de surface, les premières données comprenant un premier angle de glissement pour au moins une roue d'un véhicule (100) ;
la réception (304), par le circuit de traitement, de secondes données correspondant à un second ensemble de conditions de surface, les secondes données comprenant un second angle de glissement pour au moins une roue d'un véhicule (100) ;
la comparaison (308), par le circuit de traitement, du premier angle de glissement et du second angle de glissement ; et
en cas de différence entre le premier angle de glissement et le second angle de glissement, la détermination (310), par le circuit de traitement, qu'un frottement de surface associé au premier ensemble de conditions de surface est différent d'un frottement de surface associé au second ensemble de conditions de surface ;
dans lequel une accélération latérale du véhicule associée aux premières données est sensiblement la même qu'une accélération latérale du véhicule associée aux secondes données.

9. Procédé mis en œuvre par ordinateur selon la revendication 8, dans lequel au moins l'un d'une charge de véhicule, d'une vitesse de véhicule, d'un type de pneu, d'une pression de pneu et d'une usure de pneu est sensiblement constant entre le véhicule (100) associé aux premières données et le véhicule (100) associé aux secondes données.

10. Procédé mis en œuvre par ordinateur selon la revendication 8 ou 9, dans lequel l'accélération latérale du véhicule (100) associé aux premières données est inférieure à un seuil de l'accélération latérale du véhicule (100) associé aux secondes données.

11. Procédé mis en œuvre par ordinateur selon l'une quelconque des revendications 8 à 10, dans lequel les premières données et les secondes données sont associées à la même section d'un itinéraire.

12. Procédé mis en œuvre par ordinateur selon l'une quelconque des revendications 8 à 11, dans lequel les premières données sont reçues d'un premier véhicule réel (100) et les secondes données sont reçues d'un second véhicule réel (100).

13. Procédé mis en œuvre par ordinateur selon l'une quelconque des revendications 8 à 10, dans lequel les premières données sont reçues d'un véhicule réel (100), et les secondes données sont reçues d'un modèle de véhicule.

14. Produit de programme informatique comprenant un code de programme pour mettre en œuvre, lorsqu'il est exécuté par le circuit de traitement, le procédé mis en œuvre par ordinateur selon l'une quelconque des revendications 8 à 13.

15. Support de stockage non transitoire lisible par ordinateur comprenant des instructions qui, lorsqu'elles sont exécutées par le circuit de traitement, amènent le circuit de traitement à mettre en œuvre le procédé mis en œuvre par ordinateur selon l'une quelconque des revendications 8 à 13.

FIG. 1

FIG. 2

300

**FIG. 3**

400

**FIG. 4**

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023095123 A

- EP 0970876 A2

**Non-patent literature cited in the description**

- **HSU, YUNG-HSIANG JUDY et al.** Estimation of Tire Slip Angle and Friction Limits Using Steering Torque.. *IEEE Transactions on Control Systems Technology*, 2010, vol. 18, 896-907